Europäisches Patentamt

European Patent Office

Office européen des brevets

(19)

(11) EP 0 680 544 B1

# (12) FASCICULE DE BREVET EUROPEEN

(45) Date de publication et mention
de la délivrance du brevet:
**09.04.1997 Bulletin 1997/15**

(51) Int Cl.6: **E21B 47/08**, E21B 47/02,
G01V 3/20

(21) Numéro de dépôt: **94905148.6**

(86) Numéro de dépôt international:
**PCT/FR94/00083**

(22) Date de dépôt: **24.01.1994**

(87) WO 94/17281 (04.08.1994 Gazette 1994/18)

(54) **PROCEDE DE DETERMINATION DES VARIATIONS DE LA MORPHOLOGIE D'UN PUITS DE FORAGE**

VERFAHREN ZUR BESTIMMUNG DER ÄNDERUNG DER MORPHOLOGIE EINES BOHRLOCHS

METHOD FOR DETERMINING CHANGES IN WELL BORE MORPHOLOGY

(84) Etats contractants désignés:
**DE FR GB IT NL**

(30) Priorité: **27.01.1993 FR 9300787**

(43) Date de publication de la demande:
**08.11.1995 Bulletin 1995/45**

(73) Titulaire: **ELF AQUITAINE PRODUCTION**
**92400 Courbevoie (FR)**

(72) Inventeurs:
• **DEBOAISNE, Renaud**
**F-64460 Bedeille (FR)**
• **GAUER, Pascal**
**F-64350 Lembeye (FR)**

(74) Mandataire: **Bertrand, Didier et al**
**c/o S.A. FEDIT-LORIOT & AUTRES**
**CONSEILS EN PROPRIETE INDUSTRIELLE**
**38, Avenue Hoche**
**75008 Paris (FR)**

(56) Documents cités:
**EP-A- 0 110 750**        **EP-A- 0 112 248**
**EP-A- 0 363 259**        **EP-A- 0 502 757**

## Description

La présente invention concerne un procédé de détermination des variations de la morphologie d'un puits de forage.

De plus en plus, on utilise l'image électrique de la paroi du puits de forage pour déterminer la forme et les dimensions dudit puits. De telles images électriques de la paroi du puits de forage sont obtenues au moyen d'outils spécifiques, appelés pendagemètres et parmi lesquels on peut citer celui connu sous la dénomination FORMATION MICRO SCANNER (FMS), mis au point par la société SCHLUMBERGER.

Un pendagemètre tel que le FMS comprend à sa partie inférieure des moyens d'émission d'un courant électrique focalisé, et des patins qui sont en appui sur la paroi du puits de forage. Les résistivités électriques de ladite paroi sont mesurées au moyen d'électrodes disposées sur chacun desdits patins. Le nombre des électrodes sur chaque patin peut varier d'un outil à l'autre, de manière à obtenir une meilleure couverture de la paroi du puits.

De plus, l'outil de mesure, FMS ou équivalent, est prévu pour fonctionner dans des boues à base d'eau conductrice, la profondeur d'investigation étant de 2,5 cm (1 pouce) à 15 cm (6 pouces).

L'outil comprend également à la partie supérieure au moins un accéléromètre triaxial et trois magnétomètres qui permettent de mesurer à chaque période de mesure la vitesse, la position et l'orientation de l'outil.

Les enregistrements des mesures effectuées par l'outil peuvent être traités de manière à procéder notamment à une correction de la vitesse et plus particulièrement à la correction des mouvements irréguliers de l'outil dûs à des coincements dudit outil dans le puits et à une correction d'intensité car l'intensité du courant émis varie de façon à maintenir une résolution optimale dans le cas d'importants contrastes de résistivité.

D'autres traitements tels que la normalisation horizontale des mesures et la représentation des images de résistivité par rapport à un azimut choisi, le Nord généralement, peuvent être également appliqués.

L'outil de mesure, succinctement décrit ci-dessus, est notamment utilisé pour connaître la direction de la contrainte maximum qui peut provoquer une déformation de la paroi du puits de forage. Une telle détermination est connue sous le terme générique d'ovalisation.

En effet, sous l'effet des contraintes in-situ d'origine tectonique, la paroi d'un puits de forage a tendance à s'écailler dans une direction préférentielle, créant ainsi des caves excentriques plus ou moins profondes dont le grand axe est perpendiculaire à la direction de la contrainte horizontale maximum. Ce phénomène est connu sous le terme d'ovalisation par écaillage.

La connaissance de la direction de la contrainte horizontale maximum actuelle permet de mieux connaître les directions de drainage des réservoirs fissurés, de prévoir les directions de développements de fracturations hydrauliques, de comprendre et de résoudre certains des problèmes de tenue de paroi.

De ce fait, on a cherché à développer l'ovalisation de manière à détecter, orienter et quantifier les déformations de la paroi d'un puits de forage, et surtout à discriminer les différents types d'ovalisation pour distinguer celui qui permettra de préciser l'orientation de la contrainte horizontale maximum, car il existe plusieurs types d'ovalisation qui sont liés à d'autres types de déformations, d'aspect plus ou moins identiques mais d'origines différentes. C'est ainsi qu'il existe une ovalisation d'usure due aux frottements du train de tiges de forage sur la paroi du puits, une ovalisation liée à la présence de discontinuités structurales, comme la stratification, la fracturation, etc.

Malheureusement, les procédés actuels ne permettent pas de discriminer ou de distinguer très rapidement et de façon sûre, le type d'ovalisation qui permet de connaître l'orientation de la contrainte horizontale maximum.

En effet, en fonction des mesures des résistivités effectuées par l'outil, il est nécessaire de procéder à une définition empirique du type d'ovalisation, puis de déterminer si ladite ovalisation correspond aux études préalables réalisées par d'autres moyens. Dans le cas où une telle correspondance n'est pas satisfaisante, alors on définit une ovalisation d'un autre type, et ainsi de suite, jusqu'à la détermination de l'ovalisation appropriée.

La présente invention a pour but de proposer un procédé de détermination des variations de la morphologie d'un puits de forage, qui permette de déterminer les différents types d'ovalisation, de façon séquentielle et, après visualisation sur un support, le type d'ovalisation qui indique l'orientation convenable de la contrainte horizontale maximum.

La présente invention a pour objet un procédé du type utilisant un outil comprenant au moins deux diamétreurs et des organes de mesure et consistant à mesurer en continu à l'aide dudit outil et en fonction de la profondeur,

- le plongement et l'azimut ($a_1$) du puits dans un référentiel géographique ;
- les diamètres internes du puits suivant deux directions perpendiculaires au moyen des deux diamétreurs, l'un des diamètres internes étant représentatif de la plus grande déformation horizontale du puits ;
- l'azimut ($a_2$) d'un premier diamétreur considéré comme diamétreur de référence, dans le référentiel du puits;

et il est caractérisé en ce qu'il consiste en outre à :

- déterminer en continu l'excentricité ($e_m$) du puits qui est représentative du rapport des diamètres du puits ainsi qu'un écart d'excentricité $\Delta e_m$ qui est égal à $1-e_m$;

- déterminer l'azimut ($a_3$) du deuxième diamétreur à partir de l'azimut ($a_2$) du premier diamétreur de référence, dans le référentiel du puits,
- déterminer la variation de l'azimut ($a_2$) du premier diamétreur de référence pendant le déplacement de l'outil dans le puits de manière à déterminer la vitesse de rotation ($V_R$) dudit diamétreur de référence au cours dudit déplacement,
- comparer ledit écart d'excentricité ($\Delta e_m$) par rapport à une valeur de seuil ($\Delta e_s$) pour définir la présence d'une ovalisation du puits lorsque ($\Delta e_m$) est supérieur à ($\Delta e_s$), puis à préciser le type d'ovalisation par comparaison de la vitesse de rotation ($V_R$) à une valeur de seuil ($V_S$).

D'autres avantages et caractéristiques ressortiront mieux à la lecture d'un mode de mise en oeuvre préféré de l'invention ainsi que des dessins annexés sur lesquels :

La figure 1a est une vue d'une ovalisation d'un puits de forage dans un champ de contraintes anisotropes.

La figure 1b est une vue en perspective de la partie inférieure de l'outil muni de quatre patins.

La figure 2 est une représentation sur un cylindre déroulé de l'information enregistrée sur chaque patin, sur laquelle les zones sombres représentent les zones de fortes valeurs de conductivité.

La figure 3 représente trois courbes, en fonction de la profondeur, représentatives du diamètre nominal du puits et des diamètres mesurés par l'outil dans deux directions perpendiculaires.

La figure 4 représente, en fonction de la profondeur, l'écart d'excentricité déterminé à partir des valeurs des deux diamètres du puits mesurés par l'outil de la figure 1b.

La figure 5 représente quatre courbes, en fonction de la profondeur, qui sont représentatives de la valeur de la déviation du puits par rapport à la verticale (en trait plein), de la direction de la déviation du puits, entre 0 et 180° par rapport au Nord (en tiret), de la direction de l'ovalisation lorsqu'elle est inférieure à un seuil prédéterminé (en pointillé) et de la direction de l'ovalisation lorsqu'elle est supérieure au seuil prédéterminé (en pointillé épais).

La figure 6 est un découpage en zones d'ovalisation suivant un code de représentation.

Les figures 7a et 7b sont deux vues du puits, en fonction de la profondeur, dans deux directions perpendiculaires et sur lesquelles sont représentées les traces de deux patins.

La figure 8 est une représentation sur un cylindre déroulé de l'information enregistrée sur chaque patin.

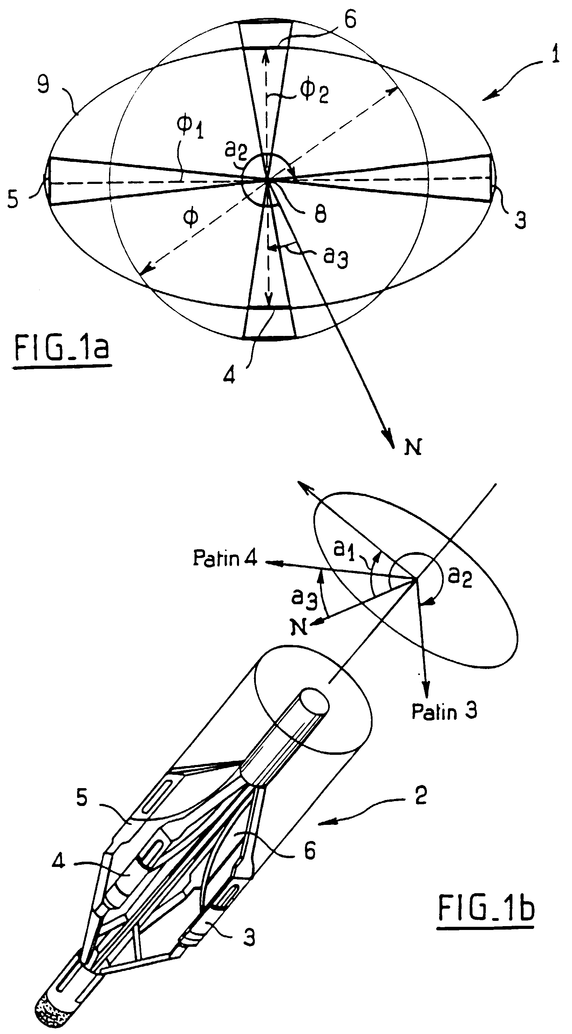

Dans un puits de forage de diamètre nominal $\varnothing$ on descend, au moyen d'un câble non représenté mais qui comprend toutes les liaisons électriques et mécaniques nécessaires, un outil du type pendagemètre équipé de moyens appropriés tels qu'indiqués précédemment et dont seule la partie inférieure est représentée sur la figure 1b. L'outil 2 comprend au moins quatre patins 3 à 6 qui sont couplés deux à deux, de manière à réaliser deux diamétreurs 3,5 et 4,6 qui sont disposés suivant deux directions perpendiculaires. Un des diamétreurs, par exemple le diamétreur 3,5 mesure la plus grande déformation horizontale du puits $\varnothing_1$, tandis que l'autre diamétreur 4,6 mesure la déformation $\varnothing_2$ du puits perpendiculaire à la précédente.

A l'aide des magnétomètres de l'outil, on détermine la déviation ou plongement 51 de l'axe 8 du puits par rapport à la verticale. On mesure également l'azimut $a_1$ de l'axe 8 du puits dans un référentiel géographique et l'azimut $a_2$ du patin 3 que l'on considère comme étant le patin de référence, les azimuts $a_1$ et $a_2$ étant repérés par rapport au Nord magnétique par exemple et comptés dans le sens horaire.

De manière continue c'est-à-dire pendant la remontée de l'outil 2 à partir d'un point bas donné vers un point haut du puits, on détermine l'excentricité $e_m$ dudit puits. L'excentricité $e_m$ est déterminée par la relation $\varnothing_2/\varnothing_1$, $\varnothing_1$ étant le plus grand diamètre mesuré et $\varnothing_2$ étant le plus petit diamètre mesuré et on calcule l'écart d'excentricité $\Delta e_m$ à l'aide de la relation $1\dfrac{\varnothing_2}{\varnothing_1} = 1-e_m$.

Lorsque le rapport $\varnothing_2 / \varnothing_1$ est égal à 1, on est en présence d'un puits supposé circulaire ($\Delta e_m = O$), et lorsque le rapport $\varnothing_2 / \varnothing_1$ est inférieur à 1 ( $\Delta e_m > O$), on est en présence d'une section ovale du puits, analogue à une ellipse. En pratique, l'excentricité $e_m$ est comprise entre 1 et 0,25, cette dernière valeur correspondant à une ovalisation très importante. On choisit arbitrairement le seuil d'écart d'excentricité $\Delta e_s$ de façon que par exemple $1-\varnothing_2/\varnothing_1 = 0,04$ ; on peut également dire que le seuil d'écart d'excentricité $\Delta e_s$ est fixé dans ce cas à 4 %, l'écart d'excentricité $\Delta e_m$ déterminé étant alors comparé à cette valeur de seuil $\Delta e_s$.

A partir de l'azimut $a_2$ du patin de référence, on détermine l'azimut $a_3$ d'un des patins, par exemple le patin 4 du deuxième diamétreur 4,6 et on détermine, toujours en continu, la variation $\Delta a_2$ de l'azimut $a_2$ du patin de référence 3 pendant le déplacement de l'outil 2 dans le puit 1 afin de déterminer la vitesse de rotation $V_R$ dudit patin 3 ou, ce qui revient au même, du diamétreur 3,5.

Dans une autre étape, on compare l'écart d'excentricité déterminé $\Delta e_m$ par rapport à une valeur de seuil prédéterminée $\Delta e_s$ pour s'affranchir des irrégularités de la paroi et surtout de la précision des mesures effectuées par les diamétreurs 3,5 et 4,6, ce qui permet de déterminer la présence ou non d'une ovalisation ou déformation de la paroi du puits.

Le type d'ovalisation présente dans le puits est déterminé par comparaison de la vitesse de rotation $V_R$ avec une valeur de seuil prédéterminée $V_S$.

L'écart $\Delta_a$ entre l'azimut $a_1$ du puits et l'azimut $a_2$ ou $a_3$, en l'occurrence l'azimut $a_2$, dans l'exemple représenté, du plus grand diamétreur, est comparé, si besoin est, avec une valeur d'écart minimum prédéterminée $\Delta_a$

min. L'écart $\Delta_a$ min est choisi en fonction de la valeur du plongement du puits. C'est ainsi que plus le plongement du puits s'écarte de la verticale, plus l'action du train de tiges sera importante et plus l'écart $\Delta_a$ min sera important. Par exemple, lorsque le plongement est

i) supérieur à 10°, $\Delta_a$ min est égal à 30°,
ii) compris entre 5 et 10°, $\Delta_a$ min est égal à 20°,
iii) inférieur à 5°, $\Delta_a$ min est égal à 10°.

Lorsque la valeur de la vitesse de rotation $V_R$ est supérieure à la valeur de seuil prédéterminée $V_S$ alors on est en présence d'une ovalisation du type cave hélicoïdale.

Lorsque la valeur de la vitesse de rotation $V_R$ est inférieure à la valeur de seuil prédéterminée $V_S$, on compare l'écart $\Delta_a$ avec $\Delta_a$ min. Si $\Delta_a$ est supérieur à $\Delta_a$ min, l'ovalisation est du type écaillage et si $\Delta_a$ est inférieur à $\Delta_a$ min, l'ovalisation est du type usure.

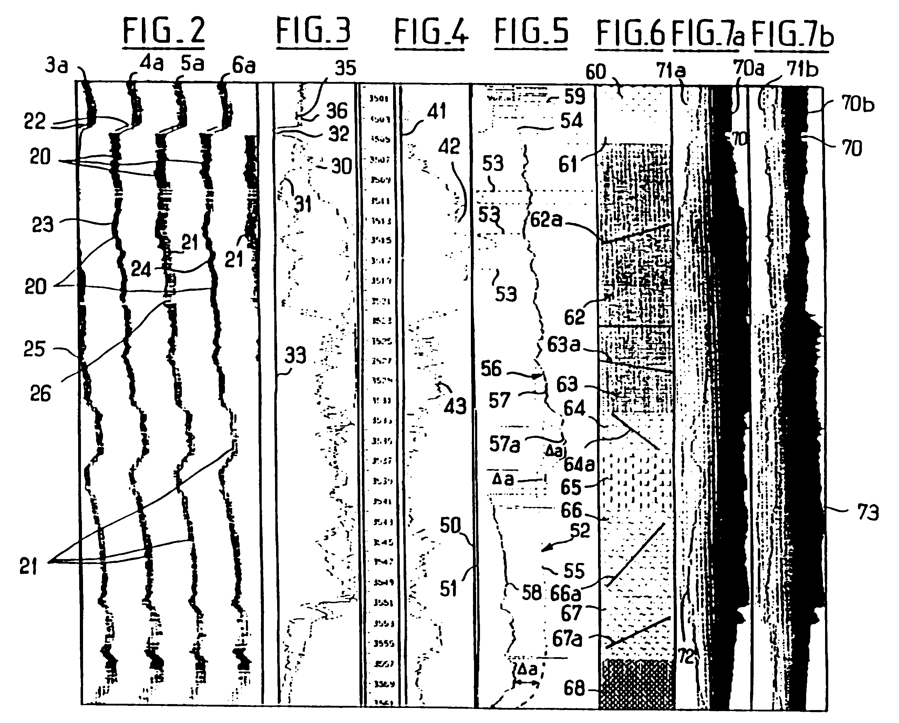

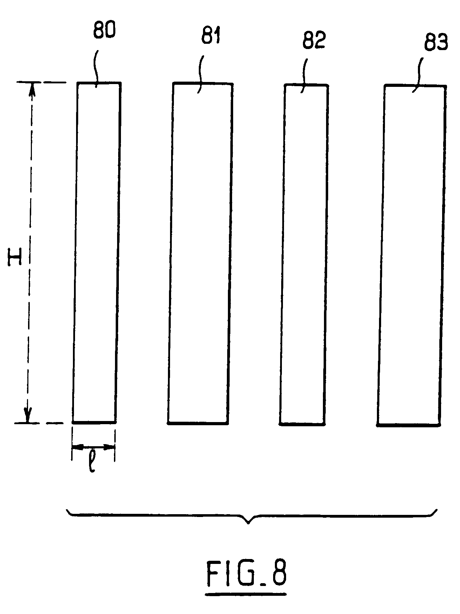

Sur la figure 2, sont représentées sous forme de bandes déroulées 3a à 6a, les informations enregistrées sur les quatre patins 3 à 6 respectivement. Les zones sombres 20 représentent les zones de forte valeur de conductivité alors que les zones plus claires 21 représentent les faibles valeurs de conductivité ou fortes valeurs de résistivité. La zone 22 où l'on observe un changement de direction du déroulé correspond à une zone du puits dans laquelle l'outil de mesure est bloqué momentanément, cela correspondant, pour la zone considérée, à un diamètre du puits égal au diamètre nominal Ø ; cela est également visible sur les figures 3, 7a et 7b où à la cote 3504 du puits, les deux diamètres mesurés sont égaux, 32 sur la figure 3, en raison de la quasi-superposition des deux courbes 30 et 31; excentricité 41 très inférieure au seuil prédéterminé sur la figure 4 ; étranglement 70 sur les figures 7a et 7b.

Quand l'outil est guidé, il n'y a pas de changement de direction dans les bandes et à chaque changement de direction cela signifie que l'outil n'est plus guidé et peut tourner, sans résistance, tiré par le câble de remontée.

A la cote 3515, les deux bandes déroulées 3a et 5a apparaissent claires (fortes résistivités) alors que les bandes déroulées 4a et 6a apparaissent sombres, correspondant à une forte conductivité.

La largeur des bandes déroulées 4a et 6a est bien inférieure à celle des bandes déroulées 5a et 3a ce qui indique que le puits, à cette cote, est ovalisé et que les patins 4 et 6 sont dans le grand axe de l'ovale. Dans le grand axe de l'ovale, la paroi est écaillée, la boue pénétrant dans cette zone écaillée rend la formation plus conductrice que la même formation vue à la même profondeur par les patins 3 et 5.

Cela est visible sur la figure 3 où la courbe 31 représentant le diamètre mesuré par les patins 3 et 5 est proche du diamètre nominal 33, alors que la courbe 30 représentant le diamètre mesuré par les patins 4 et 6, est très éloignée du diamètre nominal, ceci correspondant sur la figure 4, à un fort écart d'excentricité 42 très supérieur au seuil prédéterminé 41.

L'examen des figures 3 et 4 montre qu'il y a une parfaite correspondance entre les courbes représentées. En effet, la partie 42 de la figure 4, qui est représentative d'une forte excentricité, proche de 0,5, correspond à une très nette séparation des courbes 30 et 31 de la figure 3. Le même phénomène, en moins accentué, est visible sur la partie 43 de la figure 4, les courbes 30 et 31 de la figure 3 étant encore éloignées l'une de l'autre. Par contre, le point de contact de la partie 32 des courbes 30 et 31 qui sont confondues sur la figure, sur la verticale 33 (diamètre nominal du puits) montre clairement qu'il n'y a pas d'excentricité et pas de cave alors que si l'on examine les parties 35 et 36 respectivement des courbes 30 et 31 (cote 3500 à 3503), on s'aperçoit que l'excentricité est très faible (les courbes 30 et 31 étant très proches l'une de l'autre) mais qu'il y a une cave car on est éloigné du diamètre nominal du puits 33.

Entre les cotes 3537 et 3541, les courbes 30 et 31 sont également très proches l'une de l'autre, tout en étant très éloignées, dans ce cas, du diamètre nominal du puits 33, ce qui indique qu'il n'y a pas ou peu d'excentricité mais la présence d'une cave.

En se reportant aux parties correspondantes en regard de la figure 4, on observe une confirmation de la faible ou forte excentricité, aux différentes cotes dans le puits.

Sur la figure 5, la ligne 50 représente un axe vertical fictif. La courbe 51 représente la déviation de l'axe du puits par rapport à l'axe vertical fictif 50. Entre les cotes 3507 et 3522, la déviation est quasi nulle, alors qu'aux autres cotes du puits de part et d'autre des cotes indiquées et visibles sur la figure, ladite déviation est inférieure à 5°.

La courbe 52, en tirets, représente la direction de la déviation 51, par rapport au Nord et comptée entre 0 et 180°. Pour la partie du puits située entre les cotes 3507 et 3522, la courbe 52 comporte une partie 53 très fluctuante car la mesure de l'azimut d'un plan sub-horizontal n'a pas de sens mathématique ou physique. Les parties 54 et 55 de la courbe 52, indiquent que la direction de la déviation varie très faiblement.

La courbe 56, en pointillés, représente la direction du grand axe de l'ovale, comptée entre 0 et 180° par rapport au Nord.

Jusqu'à la cote 3505, la partie 59 de la courbe 56 correspondant à une zone du puits qu'on désigne par zone 59, indique que le grand diamètre de l'ovale est alternativement mesuré par le diamétreur 3,5 ou 4,6. Le même phénomène apparaît entre les cotes 3537 et 3541. En conséquence, entre les cotes 3505 et 3537, d'une part, et au-delà de la cote 3541, d'autre part, la courbe 56 comprend deux parties 57 et 58 qui indiquent une faible variation de la direction d'ovalisation et on peut en conclure que l'outil tourne très faiblement dans le puits, l'outil tournant encore plus faiblement dans la partie 58 que dans la zone 57. Cependant, la vitesse de rotation de l'outil est plus élevée dans la partie extrême inférieure de la zone 58 que dans la zone 57.

Sur les zones 57 et 58, on a représenté une courbe en pointillés épais qui traduit une ovalisation supérieure au seuil prédéterminé, la zone 57 correspondant aux parties 42 et 43 de la figure 4. L'examen des figures 2, 3, 4 et 5 correspondant aux parties 42 et 43 de la figure 4 permet d'affirmer qu'on est en présence d'un écaillage pur.

En partant de la courbe en pointillés épais de la figure 5 correspondant aux parties 42 et 43 de la figure 4, on constate une faible vitesse de rotation de l'outil; une faible variation de la vitesse de rotation de l'outil et une déviation presque nulle du puits. Sur la figure 4, les parties 42 et 43 indiquent une très forte excentricité ce qui est une indication d'une forte amplitude de l'ovalisation. L'ensemble de ces informations indique un écaillage quasi-certain.

L'irrégularité des courbes 30 et 31 correspondant aux zones 42 et 43 confortent la présence d'ovalisation par écaillage.

La figure 2 permet, sur ces mêmes parties 42 et 43, de déterminer si on est en présence ou non d'un écaillage. En effet, au droit des parties 42 et 43, les visualisations des patins 3 à 6 dans le puits, permettent à une même profondeur de différencier les écarts de conductivité entre patins. Par exemple, si l'on considère les visualisations 23 et 24 des bandes déroulées 4a et 6a, on s'aperçoit qu'elles sont foncées entre les cotes 3504 et 3530, ce qui est le reflet d'une forte conductivité, alors que pour les mêmes cotes, les visualisations 25 et 26 des bandes 3a et 5a montrent des zones plus claires, ce qui est le reflet d'une faible conductivité ou forte résistivité. Cela permet de conclure qu'on est en présence de fissures dans la paroi du puits, qui sont envahies par de la boue de forage conductrice. Du fait que la déformation du puits est due à une ovalisation par une fissuration, on en déduit que l'ovalisation de la paroi du puits fut produite par l'effondrement dans le puits de portions de paroi comprises entre des fissures, lesdites portions étant appelées des "écailles".

La figure 6 est une synthèse des informations données par les figures 2 à 5.

La zone 60 correspond à une zone sans ovalisation marquée (partie ou zone 59 de la courbe 56), d'écart d'excentricité inférieur au seuil (partie 41 de la figure 4), et comportant au moins une cave (parties 35 et 36 des courbes 30 et 31) qui est l'indication d'une faible cohésion des matériaux constituant la roche présente à cette profondeur.

La zone 61 correspond à une zone du puits qui n'est pas déformée, les courbes 30 et 31 en regard sont pratiquement confondues, le diamètre du puits mesuré étant sensiblement égal au diamètre nominal.

Les zones 62 et 63 correspondent à des zones d'ovalisation marquée, avec une excentricité très forte (figure 4), une vitesse de rotation de l'outil faible (figure 5), une déviation de l'axe du puits quasi nulle (figure 5) et un écaillage certain du fait de la forte conductivité dans la direction du grand axe de l'ellipse (figure 2), cette direction étant matérialisée par un segment de droite 62a, pour ce qui concerne la zone 62, orienté à 75° par rapport au Nord (vers Est-Nord Est) et pour ce qui concerne la zone 63 par un segment 63a orienté à 110° par rapport au Nord (vers Est-Sud Est).

La zone 64 correspond à une zone dans laquelle on a un écart d'excentricité qui, globalement, est supérieur au seuil (partie 57 de la courbe 56), mais relativement faible, avec une faible déviation du puits. Malgré une faible déviation du puits, on constate un certain parallélisme entre la courbe 56 et la courbe 52. L'écart $\Delta_a$ entre ces deux courbes est mesuré puis comparé à un écart prédéterminé $\Delta_a$ min. $\Delta_a$ étant supérieur mais proche du $\Delta_a$ min, on en déduit un écaillage probable. Lorsque l'écart $\Delta_a$ est inférieur à $\Delta_a$ min, alors on a une ovalisation du type usure. Le segment 64a représente la direction du grand axe moyen de l'ovalisation dans cete zone, ce segment étant orienté à 140° par rapport au Nord (vers le Sud-Est).

La zone 65 correspond à une zone dans laquelle les diamètres mesurés par les diamétreurs sont sensiblement égaux (courbes 30 et 31 pratiquement superposées), avec une faible déviation de la direction du puits et une excentricité globalement inférieure au seuil. De plus, les courbes 52 et 56, pour la zone considérée, sont sensiblement parallèles et l'écart $\Delta_a$ entre ces courbes est inférieur à $\Delta_a$ min. Par ailleurs, on a déterminé, par exemple par calcul, la vitesse de rotation $V_R$ de l'outil puis on compare $V_R$ à une valeur $V_S$ prédéterminée qu'on s'est fixée. Dans cette zone, on constate que $V_R$ < $V_S$ et comme $\Delta_a$ est inférieur à $\Delta a$ min, on en conclut qu'on est en présence d'une ovalisation par usure.

Les zones 66 et 67 sont analogues aux zones 62 et 63, c'est-à-dire à des zones d'ovalisation par écaillage, sans anomalie de conductivité, visibles sur la figure 2 et avec des directions de grand axe d'ovalisation matérialisées par les segments 66a et 67a respectivement; le segment 66a est Nord 30° (vers Nord-Est) et le segment 67a est Nord 35° (vers Nord-Est).

La zone 68 correspond à une zone dans laquelle on a un écart d'excentricité supérieur au seuil, une vitesse de rotation $V_R$ de l'outil forte et supérieure au seuil $V_S$ (fléchissement de la courbe 52), avec un $\Delta_a$ > $\Delta_a$ min. Ceci permet de conclure à la présence d'une ovalisation de type cave hélicoïdale qui est provoquée par le frottement en rotation du train de tiges de forage dans une zone qui est soit de plus faible cohésion ou dans laquelle l'axe du puits change de direction.

La courbe qui a été utilisée pour générer la courbe de direction d'ovalisation 56 est lissée de façon à ne pas découper le puits en un trop grand nombre de zones non significatives de la lithologie rencontrée.

Sur les figures 7a et 7b, on a représenté les diamètres du puits en fonction de la profondeur et suivant deux directions perpendiculaires.

Les traces 70a à 71b représentent les parois du puits dans le plan de coupe choisi passant par l'axe du puits, les distances séparant ces parois mais situées dans un plan perpendiculaire au plan de coupe représentant les diamètres apparents du puits.

Les traces 72 (figure 7a) et 73 (figure 7b) correspondent respectivement aux patins 3 et 5, les traces correspondant aux patins 4 et 6, n'étant pas visibles sur les figures 7a et 7b. Ces figures 7a et 7b permettent de visualiser l'excentricité dans toutes les directions par un choix convenable du plan de coupe.

Selon une autre caractéristique de l'invention, ces informations enregistrées à partir des diamétreurs 4,6 et 3,5 sont affichées sur un support quelconque tel qu'une bande de papier ou un écran, par leur image déroulée, ainsi que cela apparaît sur la figure 8, l'image déroulée comprenant des bandes distinctes rectangulaires 80 à 83 de largeur variable ; chaque bande est l'image d'un patin des diamétreurs sur le cylindre déroulé de diamètre $\varnothing$, ladite bande ayant une dimension horizontale $\underline{l}$ ou largeur et une dimension verticale H représentant les enregistrements aux différentes profondeurs.

On se reporte à la figure la qui représente une vue schématique en plan d'un cercle représentant le puits de diamètre nominal $\varnothing$ et d'une ellipse 9 représentant la déformation ovalisée du puits avec les quatre patins 3 à 6.

Dans l'hypothèse d'un volume initial cylindrique, les informations issues de chaque patin 3 à 6, seraient représentées sur le déroulé par des bandes de largeur identiques, ladite largeur étant égale à :

$$L_1 = \text{largeur du patin x échelle de visualisation.}$$

La largeur du déroulé cylindrique serait égale à :

$$L = \pi \times \varnothing \times \text{échelle de visualisation.}$$

La représentation sur un cylindre déroulé de l'information enregistrée sur chaque patin, dans un volume quelconque non cylindrique, est fonction du rapport entre le diamètre nominal $\varnothing$ du cylindre déroulé et le diamètre $\varnothing_e$ enregistré par la paire de patins incluant le patin considéré.

La largeur $L_1$ de l'image d'un patin situé à une distance $\frac{1}{2}\varnothing$ de l'axe du puits ou de l'outil équivaut sur le cylindre déroulé de rayon $\frac{1}{2}\varnothing$ à $l = L_1 \times \frac{\varnothing}{\varnothing}$.

On constate que la largeur de bande sur le cylindre déroulé de diamètre $\varnothing$ correspondant à un patin situé à une distance $\frac{1}{2}\varnothing_1 > \frac{1}{2}\varnothing$ est inférieure à la largeur du patin (à l'échelle de visualisation près) ; de la même manière, la largeur de la bande correspondant à un patin situé à une distance $\frac{1}{2}\varnothing_1 < \frac{1}{2}\varnothing$ est supérieure à la largeur du patin.

Le procédé de représentation est valable quels que soient le nombre de patins et leur largeur, que les patins soient liés deux à deux ou indépendants les uns des autres. La position relative des patins sur un cylindre déroulé est obtenue par une mesure spécifiant la position de l'un des patins, celui de référence par exemple, dans le référenciel du puits, la position des autres patins étant calculée à partir de l'écart angulaire des patins entre eux.

Le procédé selon l'invention permet de visualiser sur un support les différentes mesures en fonction de la profondeur pour produire des logs, les différents types d'ovalisation, en fonction de la profondeur, pouvant être visualisés sur un support suivant un code de représentation, par exemple sous la forme de zones colorées où chaque couleur correspond à un type d'ovalisation (zones 60 à 68 de la figure 6 par exemple).

## Revendications

1. Procédé de détermination des variations de la morphologie d'un puits de forage, du type utilisant un outil comprenant au moins deux diamétreurs et des organes de mesure et consistant à mesurer en continu à l'aide dudit outil et en fonction de la profondeur

    - le plongement et l'azimut $(a_1)$ du puits dans un référentiel géographique ;

    - les diamètres internes du puits suivant deux directions perpendiculaires au moyen des deux diamétreurs, l'un des diamètres internes étant représentatif de la plus grande déformation horizontale du puits ;

    - l'azimut $(a_2)$ d'un premier diamétreur considéré comme diamétreur de référence, dans le référentiel du puits;

    caractérisé en ce qu'il consiste en outre à :

    - déterminer en continu l'excentricité $(e_m)$ du puits qui est représentative du rapport des diamètres du puits ainsi que l'écart d'excentricité $\Delta e_m = 1 - e_m$,

    - déterminer l'azimut $(a_3)$ du deuxième diamétreur à partir de l'azimut $(a_2)$ du premier diamétreur de référence, dans le référentiel du puits,

    - déterminer la variation de l'azimut $(a_2)$ du premier diamétreur de référence pendant le déplacement de l'outil dans le puits de manière à déterminer la vitesse de rotation $(V_R)$ dudit diamétreur de référence au cours dudit déplacement,

    - comparer ledit écart d'excentricité $(\Delta e_m)$ par rapport à une valeur de seuil $(\Delta e_s)$ pour définir la présence d'une ovalisation du puits lorsque $(\Delta e_m)$ est supérieur à $(\Delta e_s)$, puis à préciser le type d'ovalisation par comparaison de la vitesse de rotation $(V_R)$ à une valeur de seuil $(V_S)$.

**2.** Procédé selon la revendication 1, caractérisé en ce qu'il consiste en outre, lorsque la vitesse de rotation ($V_R$) est inférieure à la valeur de seuil ($V_S$), à mesurer l'écart ($\Delta_a$) entre l'azimut ($a_1$) du puits et l'azimut ($a_2$ ou $a_3$) du plus grand diamétreur, puis à comparer ledit écart d'azimut ($\Delta_a$) avec une valeur d'écart prédéterminée ($\Delta_a$min).

**3.** Procédé selon la revendication 1, caractérisé en ce qu'on définit une ovalisation du type cave hélicoïdale lorsque la vitesse de rotation ($V_R$) est supérieure à la valeur de seuil ($V_S$).

**4.** Procédé selon la revendication 2, caractérisé en ce qu'on définit une ovalisation du type écaillage lorsque l'écart ($\Delta_a$) est supérieur à la valeur d'écart ($\Delta_a$min).

**5.** Procédé selon la revendication 2, caractérisé en ce qu'on définit une ovalisation du type usure lorsque l'écart ($\Delta_a$) est inférieur à la valeur d'écart ($\Delta_a$min).

**6.** Procédé selon la revendication 1, caractérisé en ce que l'azimut ($a_2$) du diamétreur de référence est lissé.

**7.** Procédé selon l'une des revendications 1 à 6, caractérisé en ce que les informations enregistrées à partir de chacun des patins des diamétreurs sont affichées sur un support par leur image déroulée, et en ce que l'image déroulée comprend des bandes distinctes de largeur variable, chaque bande étant l'image d'un patin des diamétreurs, et en ce que la largeur est proportionnelle à la largeur du patin correspondant et au rapport du diamètre nominal au diamètre mesuré par le diamétreur auquel appartient ledit patin.

**8.** Procédé selon l'une des revendications précédentes, caractérisé en ce qu'on visualise sur un support les différentes mesures en fonction de la profondeur pour produire des logs.

**9.** Procédé selon l'une des revendications 1 à 7, caractérisé en ce qu'on visualise sur un support les différents types d'ovalisation en fonction de la profondeur suivant un code de représentation, par exemple sous la forme de zones colorées où chaque couleur correspond à un type d'ovalisation.

**Patentansprüche**

**1.** Verfahren zur Bestimmung der Änderungen der Morphologie eines Bohrlochs unter Verwendung eines Werkzeugs, das mindestens zwei Durchmesserfühler und Meßorgane aufweist, bei welchem mit Hilfe dieses Werkzeugs kontinuierlich in Abhängigkeit von der Tiefe folgendes gemessen wird:

- das Einfallen und der Azimut ($a_1$) des Bohrlochs in einem geographischen Bezugssystem,
- die Innendurchmesser des Bohrlochs in zwei zueinander senkrechten Richtungen mit Hilfe der beiden Durchmesserfühler, wobei einer der Innendurchmesser die größte horizontale Verformung des Bohrlochs ausdrückt,
- der Azimut ($a_2$) eines als Bezugsdurchmesserfühler betrachteten ersten Durchmesserfühlers im Bezugssystem des Bohrlochs,

dadurch gekennzeichnet, daß es außerdem aus den folgenden Schritten besteht:

- kontinuierliche Bestimmung der Exzentrizität ($e_m$) des Bohrlochs, die das Verhältnis der Durchmesser des Bohrlochs zueinander ausdrückt, sowie der Exzentrizitätsabweichung $\Delta e_m = 1 - e_m$,
- Bestimmung des Azimuts ($a_3$) des zweiten Durchmesserfühlers im Bezugssystem des Bohrlochs ausgehend vom Azimut ($a_2$) des ersten Bezugsdurchmesserfühlers,
- Bestimmung der Änderung des Azimuts ($a_2$) des ersten Bezugsdurchmesserfühlers während der Bewegung des Werkzeugs im Bohrloch, so daß die Drehgeschwindigkeit ($V_R$) dieses Bezugsdurchmesserfühlers bei dieser Bewegung bestimmt wird,
- Vergleich dieser Exzentrizitätsabweichung ($\Delta e_m$) mit einem Schwellenwert ($\Delta e_s$) zur Bestimmung des Vorhandenseins einer Ovalisierung des Bohrlochs, wenn ($\Delta e_m$) größer als ($\Delta e_s$) ist, und anschließend Bestinmmung des Ovalisierungstyps durch Vergleich der Drehgeschwindigkeit ($V_R$) mit einem Schwellenwert ($V_S$).

**2.** Verfahren nach Anspruch 1, dadurch gekennzeichnet, daß außerdem, wenn die Drehgeschwindigkeit ($V_R$) kleiner als der Schwellenwert ($V_S$) ist, die Abweichung ($\Delta_a$) zwischen dem Azimut ($a_1$) des Bohrlochs und dem Azimut ($a_2$ oder $a_3$) des größeren Durchmesserfühlers gemessen wird und dann diese Azimutabweichung ($\Delta_a$) mit einem vorbestimmten Abweichungswert ($\Delta_a$min) verglichen wird.

**3.** Verfahren nach Anspruch 1, dadurch gekennzeichnet, daß eine Ovalisierung vom Typ schraubenförmige Höhlung festgestellt wird, wenn die Drehgeschwindigkeit ($V_R$) größer als der Schwellenwert ($V_S$) ist.

**4.** Verfahren nach Anspruch 2, dadurch gekennzeichnet, daß eine Ovalisierung vom Typ Abplatzung festgestellt wird, wenn die Abweichung ($\Delta_a$) größer

als der Abweichungswert ($\Delta_a$min) ist.

5. Verfahren nach Anspruch 2, dadurch gekennzeichnet, daß eine Ovalisierung vom Typ Verschleiß festgestellt wird, wenn die Abweichung ($\Delta_a$) kleiner als der Abweichungswert ( $\Delta_a$min) ist.

6. Verfahren nach Anspruch 1, dadurch gekennzeichnet, daß der Azimut ($a_2$) des Bezugsdurchmessers geglättet ist.

7. Verfahren nach einem der Ansprüche 1 bis 6, dadurch gekennzeichnet, daß die von jeder der Kufen der Durchmesserfühler aus aufgezeichneten Daten auf einem Träger mit ihrem abgewickelten Bild angezeigt werden, daß das abgewickelte Bild einzelne Bänder veränderlicher Breite umfaßt, deren jedes das Bild einer Kufe der Durchmesserfühler ist, und daß die Breite zur Breite der entsprechenden Kufe und zum Verhältnis des Nenndurchmessers zu dem Durchmesser proportional ist, der von dem Durchmesserfühler gemessen wird, zu dem diese Kufe gehört.

8. Verfahren nach einem der vorhergehenden Ansprüche, dadurch gekennzeichnet, daß die einzelnen Messungen auf einem Träger in Abhängigkeit von der Tiefe sichtbar dargestellt werden, um Logs zu bilden.

9. Verfahren nach einem der Ansprüche 1 bis 7, dadurch gekennzeichnet, daß die verschiedenen Ovalisierungstypen auf einem Träger in Abhängigkeit von der Tiefe in einem Darstellungskode sichtbar dargestellt werden, beispielsweise in Form von farbigen Bereichen, wobei jede Farbe einem Ovalisierungstyp entspricht.

**Claims**

1. Method of determining changes in wellbore morphology, consisting in using a tool comprising at least two calipers and measurement units and consisting in continuously measuring by means of said tool and as a function of depth

   - the dip and the azimuth ($a_1$) of the wellbore in a geographical system of axes ;
   - the inner diameters of the wellbore in two perpendicular directions, by means of the two calipers, one of the inner diameters being representative of the greatest horizontal deformation of the wellbore ;
   - the azimuth ($a_2$) of a first caliper taken as a reference diameter in the system of axes of the wellbore ;

characterized in that it further consists in :

   - continuously determining the eccentricity ($e_m$) of the wellbore which is representative of the ratio of the diameters of the wellbore and the eccentricity error $\Delta e_m = 1 - e_m$,
   - determining the azimuth ($a_3$) of the second caliper from the azimuth ($a_2$) of the reference first caliper in the system of axes of the wellbore,
   - determining the variation in the azimut ($a_2$) of the reference first caliper during displacement of the tool in the wellbore in order to determine the rotation speed ($V_R$) of said reference caliper during said displacement,
   - comparing said eccentricity error ($\Delta e_m$) to a threshold value ($\Delta e_S$) to define the presence of ovalization of the wellbore when ($\Delta e_m$) is greater than ($\Delta e_S$) and then specifying the type of ovalization by comparing the rotation speed ($V_R$) to a threshold value ($V_S$).

2. Method according to claim 1 characterized in that when the rotation speed ($V_R$) is less than the threshold value ($V_S$) it further consists in measuring the error ($\Delta_a$) between the azimuth ($a_1$) of the wellbore and the azimuth ($a_2$ or $a_3$) of the larger caliper and then comparing said azimuth error ($\Delta_a$) with a predetermined error value ($\Delta_a$ min).

3. Method according to claim 1 characterized in that it indicates helical void type ovalization if the rotation speed ($V_R$) is greater than the threshold value ($V_S$).

4. Method according to claim 2 characterized in that it indicates scaling type ovalization if the error ($\Delta_a$) is greater than the error value ($\Delta_a$ min) .

5. Method according to claim 2 characterized in that it indicates wear type ovalization if the error ($\Delta_a$) is less than the error value ($\Delta_a$ min).

6. Method according to claim 1 characterized in that the azimuth ($a_2$) of the reference caliper is smoothed.

7. Method according to any one of claims 1 to 6 characterized in that the information logged from each caliper pad is viewed on a medium in the form of an image log and in that the image log comprises separate strips of varying width, each strip being the image of a caliper pad, and in that the width is proportional to the width of the corresponding pad and to the ratio of the nominal diameter to the diameter measured by the caliper of which said pad is part.

8. Method according to any one of the preceding claims characterized in that the various measurements are viewed on a medium as a function of depth to produce wellbore logs.

9. Method according to any one of claims 1 to 7 characterized in that the various types of ovalization are viewed on a medium as a function of the depth using a representation code, for example coloured areas in which each colour corresponds to a respective type of ovalization.

FIG.1a

FIG.1b

## FIG.2   FIG.3   FIG.4   FIG.5   FIG.6 FIG.7a FIG.7b

3a 4a 5a 6a

35

22
20
23
24
21
20
25
26
21

36
32
30
31
33

41
42
43
50
51

59
54
61
53
53
62a
53
62
63a
56
63
57
64
57a
Δaj
64a
Δa
65
66
52
55
58 66a
67
67a
Δaj
68

60
71a

70a
71b

70b
70

72

73

EP 0 680 544 B1

FIG.8